# EUROPEAN PATENT APPLICATION

(11) **EP 4 842 104 A1**
(43) Date of publication of application: **18.11.2026**
(21) Application number: 24918109.0
(22) Date of filing: 27.09.2024
(51) Int. Cl.: H04W 72/0453

(54) **INFORMATION CONFIGURATION METHOD, DEVICE AND STORAGE MEDIUM**

(30) Priority: 19.01.2024 CN 202410083084
(71) Applicant: ZTE Corporation, Shenzhen, Guangdong 518057 (CN)
(72) Inventor: WANG, Yuxin, Shenzhen, Guangdong 518057 (CN); XIA, Shuqiang, Shenzhen, Guangdong 518057 (CN); HU, Liujun, Shenzhen, Guangdong 518057 (CN); YU, Guanghui, Shenzhen, Guangdong 518057 (CN); MA, Yihua, Shenzhen, Guangdong 518057 (CN); BAI, Chen, Shenzhen, Guangdong 518057 (CN); LI, Songqian, Shenzhen, Guangdong 518057 (CN)
(74) Representative: Aipex B.V.
(86) International application number: PCT/CN2024/121631
(87) International publication number: WO 2025/152500

(57) **Abstract**

Provided are an information configuration method, a device, and a storage medium. An information configuration method applied to a first communication device includes: receiving sensing signal bandwidth configuration information from a second communication device; and configuring a frequency domain bandwidth of a corresponding sensing signal based on the sensing signal bandwidth configuration information.

## Description

### TECHNICAL FIELD

The present application relates to the field of communication technologies and, in particular, to an information configuration method, a device, and a storage medium.

### BACKGROUND

A cellular mobile system possesses a powerful networking capability. An integrated sensing and communication mobile network system is established through the large-scale deployment of cellular networks and the interaction between base stations and terminals, between base stations, and between base stations and the core network. Network cooperative sensing based on a cellular system can fully utilize base station resources of the cellular system, thereby not only reducing the cost of integrated sensing and communication but also achieving a networked sensing capability. By reasonably selecting sensing base stations in the cellular system and sharing, supplementing, or merging sensing data, the mutual signal interference due to too many nodes can be reduced with the advantages of a cellular network maintained. Meanwhile, network sensing can further improve sensing performance by avoiding blockage through cooperation between base stations without hardware upgraded. However, a frequency domain bandwidth of an existing sensing signal is limited by a bandwidth of a demodulation reference signal (DMRS). Therefore, how to configure the frequency domain bandwidth of the sensing signal becomes an urgent problem to be solved.

### SUMMARY

In view of this, embodiments of the present application provide an information configuration method, a device, and a storage medium, improving a sensing resolution of a sensing signal.

An embodiment of the present application provides an information configuration method applied to a first communication device. The information configuration method includes: receiving sensing signal bandwidth configuration information from a second communication device; and configuring a frequency domain bandwidth of a corresponding sensing signal based on the sensing signal bandwidth configuration information.

An embodiment of the present application provides an information configuration method applied to a second communication device. The information configuration method includes: sending sensing signal bandwidth configuration information to a first communication device to enable the first communication device to configure a frequency domain bandwidth of a corresponding sensing signal based on the sensing signal bandwidth configuration information.

An embodiment of the present application provides an information configuration apparatus applied to a first communication device. The information configuration apparatus includes a receiver and a configuration module.

The receiver is configured to receive sensing signal bandwidth configuration information from a second communication device.

The configuration module is configured to configure a frequency domain bandwidth of a corresponding sensing signal based on the sensing signal bandwidth configuration information.

An embodiment of the present application provides an information configuration apparatus applied to a second communication device. The information configuration apparatus includes a sender.

The sender is configured to send sensing signal bandwidth configuration information to a first communication device to enable the first communication device to configure a frequency domain bandwidth of a corresponding sensing signal based on the sensing signal bandwidth configuration information.

An embodiment of the present application provides a communication device. The communication device includes a memory and at least one processor.

The memory is configured to store at least one program.

The at least one program, when executed by the at least one processor, causes the at least one processor to perform the method of any preceding embodiment.

An embodiment of the present application provides a storage medium storing a computer program which, when executed by a processor, causes the processor to perform the method of any preceding embodiment.

### BRIEF DESCRIPTION OF DRAWINGS

FIG. 1 is a flowchart of an information configuration method according to an embodiment of the present application.
FIG. 2 is another flowchart of an information configuration method according to an embodiment of the present application.
FIG. 3 is a diagram illustrating configurations of DMRSs of different user equipments (UEs) according to an embodiment of the present application.
FIG. 4 is a block diagram of an information configuration apparatus according to an embodiment of the present application.
FIG. 5 is another block diagram of an information configuration apparatus according to an embodiment of the present application.
FIG. 6 is a diagram illustrating the structure of a communication device according to an embodiment of the present application.

### DETAILED DESCRIPTION

Embodiments of the present application are described hereinafter in conjunction with the drawings. The present application is described below in conjunction with embodiments and the drawings. The embodiments described below are intended to explain the present application and not to limit the scope of the present application.

In a narrow sense, a sensing network refers to a system having capabilities such as target positioning (distance measurement, velocity measurement, and angle measurement), target imaging, target detection, target tracking, and target recognition. In a broad sense, a sensing network refers to a system capable of sensing the attributes and states of all services, networks, users, terminals, and environmental objects. In an integrated sensing and communication mobile network, sensing may be divided into active sensing and passive sensing. Passive sensing refers to sensing performed by a sensing entity (a network side or a terminal) by acquiring an electromagnetic wave (such as a terahertz wave) emitted by a target object or an electromagnetic wave reflected from an object other than the sensing entity and the target object. Active sensing refers to sensing performed by the sensing entity (the network side or the terminal) by sending an electromagnetic wave and receiving an echo reflected from the target object. A node receiving the reflected wave is not necessarily a node sending a sounding signal, that is, multiple nodes of the sensing entity may implement active sensing through some form of joint processing.

In network sensing, wireless sensing signal links may be divided into the following types: (1) a base station echo sensing link via which a base station sends a sensing signal and receives an echo signal, (2) an inter-base-station sensing link via which base station 2 receives a sensing signal from base station 1, (3) an uplink sensing link via which a base station receives a sensing signal from a UE, (4) a downlink sensing link via which a UE receives a sensing signal from a base station, (5) a terminal echo sensing link via which a UE sends a sensing signal and receives an echo signal, and (6) an inter-terminal sensing link via which UE2 receives a sensing signal from UE1. In an actual system, different sensing links may be selected according to different sensing requirements. Each sensing link may correspond to one or more transmitting nodes and one or more receiving nodes, and an actual sensing system may include multiple different sensing links.

Integrated sensing and communication waveform designs include the following three designs: a communication-centric integrated waveform design, a sensing-centric integrated waveform design, and a joint communication and sensing integrated waveform design.

It is to be noted that, in embodiments of the present application, a node sending a sensing signal may be a base station, a UE, a drone, an aircraft, or a radar transmitting apparatus. In the following embodiments, the base station is used as the node sending the sensing signal. The method according to the embodiments of the present application is also applicable to sending nodes such as the UE, the drone, the aircraft, and the radar transmitting apparatus.

In the embodiments of the present application, an existing reference signal may be used as the sensing signal, or a new sensing signal may be proposed. In an example, in the case where the existing reference signal is used as the sensing signal, a base station side may use DMRSs of at least two terminals as the sensing signal and instruct, via signaling, one of the at least two terminals to sense a target based on the DMRSs of the at least two terminals and report a sensing measurement result. In an example, in the case where the new sensing signal is proposed, a multiplexing relationship between the new sensing signal and an existing New Radio (NR) reference signal (RS) is defined.

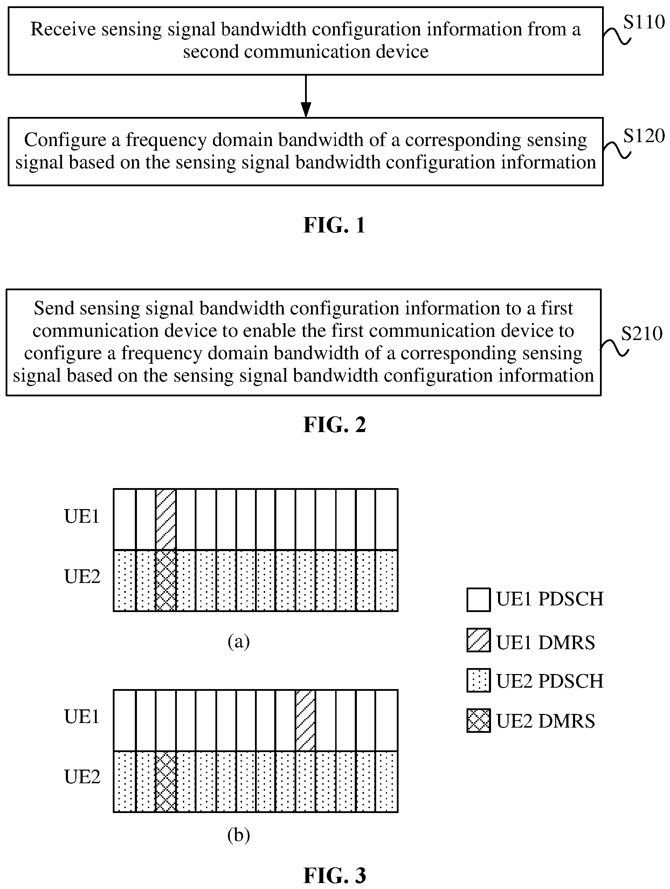

In an embodiment, FIG. 1 is a flowchart of an information configuration method according to an embodiment of the present application. This embodiment is applicable to the case where a frequency domain bandwidth of a sensing signal is flexibly configured. This embodiment may be implemented by a first communication device. For example, the first communication device may be a terminal side or a base station side. In the case where the first communication device is the terminal side, the corresponding second communication device is the base station side. In the case where the first communication device is the base station side, the corresponding second communication device is the terminal side.

As shown in FIG. 1, this embodiment includes S110 and S120.

In S110, sensing signal bandwidth configuration information is received from the second communication device.

In S120, a frequency domain bandwidth of a corresponding sensing signal is configured based on the sensing signal bandwidth configuration information.

In the embodiment, the first communication device may receive the sensing signal bandwidth configuration information from the second communication device and flexibly configure the frequency domain bandwidth of the sensing signal based on the sensing signal bandwidth configuration information. In an embodiment, the sensing signal includes DMRSs of at least two terminals to increase the frequency domain bandwidth of the sensing signal, thereby improving a sensing resolution. In an embodiment, in response to the frequency domain bandwidth of the sensing signal being not configured via wireless signaling, the frequency domain bandwidth of the sensing signal is equal to a DMRS frequency domain bandwidth of a current first communication device. In an example, the current first communication device refers to a communication device that sends or receives the sensing signal. In an example, in the case where the existing DMRS is used as the sensing signal and the frequency domain bandwidth of the sensing signal is not configured via wireless signaling, for a downlink, a sensing target may be measured based on a DMRS for a physical downlink shared channel (PDSCH) corresponding to the current first communication device, and the DMRS frequency domain bandwidth of the current first communication device may be used as the frequency domain bandwidth of the sensing signal; for an uplink, the sensing target may be measured based on a DMRS for a physical uplink shared channel (PUSCH) corresponding to the current first communication device, and the DMRS frequency domain bandwidth of the current first communication device is used as the frequency domain bandwidth of the sensing signal.

In an embodiment, in response to the frequency domain bandwidth of the sensing signal being configured via wireless signaling, the frequency domain bandwidth of the sensing signal is configured in units of DMRS frequency domain bandwidths. In an example, in the case where the existing DMRS is used as the sensing signal and the frequency domain bandwidth of the sensing signal is configured via wireless signaling, the frequency domain bandwidth of the sensing signal may be configured in units of DMRS frequency domain bandwidths, thereby solving the problem where the bandwidth of the sensing signal is limited by the DMRS bandwidth and improving the sensing resolution.

In an embodiment, configuring the frequency domain bandwidth of the sensing signal in units of DMRS frequency domain bandwidths includes one of the following: the frequency domain bandwidth of the sensing signal is equal to a current bandwidth unit; the frequency domain bandwidth of the sensing signal is equal to a sum of a first preset number of bandwidth units preceding the current bandwidth unit and the current bandwidth unit; the frequency domain bandwidth of the sensing signal is equal to a sum of a first preset number of bandwidth units following the current bandwidth unit and the current bandwidth unit; or the frequency domain bandwidth of the sensing signal is equal to a sum of a second preset number of bandwidth units preceding the current bandwidth unit, the current bandwidth unit, and a third preset number of bandwidth units following the current bandwidth unit; where the current bandwidth unit is the DMRS frequency domain bandwidth of the current first communication device, and where the first preset number, the second preset number, and the third preset number are each an integer greater than 0.

In an embodiment, configuring the frequency domain bandwidth of the sensing signal in units of DMRS frequency domain bandwidths includes: indicating the frequency domain bandwidth of the sensing signal via radio resource control (RRC) signaling of a fourth preset number of bits. In an example, the fourth preset number is an integer greater than 0. For example, the frequency domain bandwidth of the sensing signal may be indicated via fixed 1-bit RRC signaling or fixed 2-bit RRC signaling, which is not limited.

In an embodiment, the frequency domain bandwidth of the sensing signal includes at least one of: the current bandwidth unit; the current bandwidth unit and at least one bandwidth unit preceding the current bandwidth unit; or the current bandwidth unit and at least one bandwidth unit following the current bandwidth unit. In the case where the existing DMRS is used as the sensing signal and the frequency domain bandwidth of the sensing signal is indicated via RRC signaling of at least one bit, it may be indicated via the RRC signaling of at least one bit that the current bandwidth unit is the frequency domain bandwidth of the sensing signal, it may be indicated via the RRC signaling of at least one bit that a total bandwidth of the current bandwidth unit and the at least one bandwidth unit preceding the current bandwidth unit is the frequency domain bandwidth of the sensing signal, it may be indicated via the RRC signaling of at least one bit that a total bandwidth of the current bandwidth unit and the at least one bandwidth unit following the current bandwidth unit is the frequency domain bandwidth of the sensing signal, or it may be indicated via the RRC signaling of at least one bit that a total bandwidth of the current bandwidth unit, the at least one bandwidth unit following the current bandwidth unit, and the at least one bandwidth unit preceding the current bandwidth unit is the frequency domain bandwidth of the sensing signal.

In an embodiment, the sensing signal serves as a reference signal for quasi co-location (QCL) information in a transmission configuration indicator (TCI) state.

In an embodiment, a reference signal type in the TCI state includes at least a sensing target reference signal (STRS). In an example, the STRS may be added to reference signal selection types in the TCI state. It may also be understood as that a new reference signal is defined in the TCI state and used for sensing the target, which may be referred to as the STRS or a sensing function reference signal (SFRS).

In an embodiment, a starting resource block and a total bandwidth length of the sensing signal are indicated via RRC signaling. In an example, the starting resource block is used for representing a starting physical resource block (PRB) of a frequency domain resource corresponding to the newly defined sensing signal relative to common resource block 0; and the total bandwidth length is used for representing the number of PRBs occupied by the frequency domain resource corresponding to the newly defined sensing signal.

In an embodiment, a QCL type between the STRS and another sensing target includes TypeE.

The TypeE includes at least one of: a Doppler shift, an average delay, and an average angle; a Doppler shift, an average delay, and an average angle; an average angle; or an average radar cross-section (RCS). In an example, a QCL relationship between the STRS and another sensing target signal may be newly defined. For example, the QCL type between the STRS and another sensing target includes at least one of the TypeE, where the TypeE includes at least one of: the Doppler shift, the average delay, and the average angle; the Doppler shift, the average delay, and the average angle; the average angle; or the average RCS.

In an embodiment, FIG. 2 is another flowchart of an information configuration method according to an embodiment of the present application. This embodiment is applicable to the case where a frequency domain bandwidth of a sensing signal is dynamically configured. This embodiment may be implemented by a second communication device. As shown in FIG. 2, this embodiment includes S210.

In S210, sensing signal bandwidth configuration information is sent to a first communication device to enable the first communication device to configure a frequency domain bandwidth of a corresponding sensing signal based on the sensing signal bandwidth configuration information.

In an embodiment, in response to the frequency domain bandwidth of the sensing signal being not configured via wireless signaling, the frequency domain bandwidth of the sensing signal is equal to a DMRS frequency domain bandwidth of a current first communication device.

In an embodiment, in response to the frequency domain bandwidth of the sensing signal being configured via wireless signaling, the frequency domain bandwidth of the sensing signal is configured in units of DMRS frequency domain bandwidths.

In an embodiment, configuring the frequency domain bandwidth of the sensing signal in units of DMRS frequency domain bandwidths includes one of the following: the frequency domain bandwidth of the sensing signal is equal to a current bandwidth unit; the frequency domain bandwidth of the sensing signal is equal to a sum of a first preset number of bandwidth units preceding the current bandwidth unit and the current bandwidth unit; the frequency domain bandwidth of the sensing signal is equal to a sum of a first preset number of bandwidth units following the current bandwidth unit and the current bandwidth unit; or the frequency domain bandwidth of the sensing signal is equal to a sum of a second preset number of bandwidth units preceding the current bandwidth unit, the current bandwidth unit, and a third preset number of bandwidth units following the current bandwidth unit; where the current bandwidth unit is the DMRS frequency domain bandwidth of the current first communication device, and where the first preset number, the second preset number, and the third preset number are each an integer greater than 0.

In an embodiment, configuring the frequency domain bandwidth of the sensing signal in units of DMRS frequency domain bandwidths includes: indicating the frequency domain bandwidth of the sensing signal via RRC signaling of a fourth preset number of bits.

In an embodiment, the frequency domain bandwidth of the sensing signal includes at least one of: the current bandwidth unit; the current bandwidth unit and at least one bandwidth unit preceding the current bandwidth unit; or the current bandwidth unit and at least one bandwidth unit following the current bandwidth unit.

In an embodiment, the sensing signal serves as a reference signal for QCL information in a TCI state.

In an embodiment, a reference signal type in the TCI state includes at least an STRS.

In an embodiment, a starting resource block and a total bandwidth length of the sensing signal are indicated via RRC signaling.

In an embodiment, a QCL type between the STRS and another sensing target includes TypeE.

The TypeE includes at least one of a Doppler shift, an average delay, and an average angle; a Doppler shift, an average delay, and an average angle; an average angle; or an average RCS.

It is to be noted that for interpretations of parameters involved in the information configuration method applied to the second communication device, such as the sensing signal, the sensing signal bandwidth configuration information, the frequency domain bandwidth of the sensing signal, and the STRS, reference is made to the description of the corresponding parameters in the preceding information configuration method applied to the first communication device, and the details are not repeated here.

In an embodiment, a configuration process of a frequency domain bandwidth of a sensing signal is described by using an example in which an existing reference signal is used as the sensing signal. A current first communication device is denoted as a current UE, and a second communication device is denoted as a base station. It is assumed that a first preset number, a second preset number, and a third preset number are each 1, and a fourth preset number K is 2.

Generally speaking, a synchronization signal and physical broadcast channel (PBCH) block (SSB) occupies only part of a frequency domain bandwidth, a channel state information reference signal (CSI-RS) and a phase tracking reference signal (PTRS) are generally much sparser than the DMRS in frequency domain (that is, the DMRS has a higher frequency domain density), and a density of the DMRS in time domain is flexibly configurable. Therefore, the DMRS is more suitable for use as the sensing signal than the CSI-RS and the PTRS. However, a frequency domain bandwidth of the DMRS is consistent with a bandwidth of a PDSCH/PUSCH scheduled by the DMRS. In the case of PDSCH/PUSCH scheduling with a small bandwidth, the DMRS corresponding to the UE with small-bandwidth scheduling is not suitable to serve as the sensing signal.

In view of this, in embodiments of the present application, DMRSs of at least two UEs may be used as the sensing signal, thereby increasing the frequency domain bandwidth of the sensing signal.

FIG. 3 is a diagram illustrating configurations of DMRSs of different UEs according to an embodiment of the present application. As shown in FIG. 3(a), if PDSCHs of UE1 and UE2 are scheduled in a frequency division manner and have the same source reference signal for QCL (that is, the base station uses the same transmit beam for transmission to UE1 and UE2), the base station may use a DMRS of UE1 and a DMRS of UE2 as the sensing signal and instruct, via wireless signaling, UE1 or UE2 to sense a target based on the DMRS of UE1 and the DMRS of UE2 and report a sensing measurement result.

The wireless signaling indicates the following:

First, if a frequency domain resource block (RB) position of the sensing signal is not configured via RRC signaling, the sensing target may be measured based on a PDSCH DMRS of the current UE, and the frequency domain bandwidth of the sensing signal is equal to a DMRS bandwidth of the current UE.

Second, if the frequency domain RB position of the sensing signal is configured via RRC signaling, the frequency domain bandwidth of the sensing signal may be configured in units of DMRS frequency domain bandwidths. For example, if bitmap signaling is 00100, it indicates that the frequency domain bandwidth of the sensing signal is equal to the DMRS bandwidth of the current UE (denoted as a current bandwidth unit); if the bitmap signaling is 01100, it indicates that the frequency domain bandwidth of the sensing signal is equal to the preceding one bandwidth unit + the current bandwidth unit; if the bitmap signaling is 01110, it indicates that the frequency domain bandwidth of the sensing signal is equal to the preceding one bandwidth unit + the current bandwidth unit + the following one bandwidth unit.

Alternatively, fixed K-bit RRC signaling may be used. For example, 2-bit signaling is used as an example.

| 2-Bit Signaling | Meaning |
|---|---|
| 00 | Current bandwidth unit |
| 01 | Current bandwidth unit + the following one bandwidth unit |
| 10 | Current bandwidth unit + the following two bandwidth units |
| 11 | Current bandwidth unit + the following three bandwidth units |

As shown in FIG. 3(b), if the DMRS of UE1 and the DMRS of UE2 are not on the same time domain symbol, UE1 and UE2 sense the target and report measurement results, separately.

For an uplink, a sounding reference signal (SRS) is flexibly configured in both the time domain and the frequency domain, may use a Zadoff-Chu (ZC) sequence as a reference signal sequence, and has good autocorrelation characteristics and a low peak-to-average power ratio (PAPR), making it suitable for use as an uplink sensing signal.

In an embodiment, an example in which a new sensing signal is defined is used, and a multiplexing relationship between the new sensing signal and an existing NR RS is described.

Generally speaking, existing QCL types in NR include QCL-Type A, QCL-Type B, QCL-Type C, and QCL-Type D.

QCL-Type A: (Doppler shift, Doppler spread, average delay, delay spread). Other large-scale parameters than a spatial Rx parameter are the same. A description of a target channel is relatively comprehensive, and the UE may obtain a comprehensive description of characteristics of the DMRS. QCL-Type A is mostly used for channel demodulation.

QCL-Type B: (Doppler shift, Doppler spread). The Doppler shift and the Doppler spread may be inherited from a reference signal. In low-frequency scenarios, there are two cases: when a narrow-beam reference signal is used, a wide-beam reference signal is used as QCL reference; and a target reference signal has insufficient time domain resources but a sufficient frequency domain density.

QCL-Type C: (average delay, Doppler shift). QCL-Type C is only applicable to the case where the SSB is used as QCL reference. Since the SSB occupies limited resources and has a limited density, relatively coarse large-scale information can only be obtained from the SSB. That is, the Doppler shift and the average delay are inherited from the reference signal, while other large-scale parameters may be obtained from a target reference signal itself.

QCL-Type D: (spatial Rx parameter). Beam information is inherited from a reference signal and may be used for beam training.

In this embodiment, a new reference signal is defined and used for sensing the target, which may be referred to as an STRS or an SFRS. With the STRS as an example below, the STRS may be frequency-division multiplexed with a DMRS or time-division multiplexed with data. The STRS uses a linear frequency modulated (LFM) signal sequence, a maximum-length sequence (m-sequence), a ZC sequence, or a Gold sequence.

The STRS may serve as a source reference signal for the existing QCL types. For example, the STRS (STRS-Index) may be added to reference signal selection types in an information element (IE) TCI-state.

The base station and the UE may predefine that if a reference signal configured in QCL-Info is the STRS and the QCL-Type is Type A, the STRS is used as the DMRS; if the QCL-Type is Type D, a receive beam of the STRS is used for receiving the PDSCH, or a transmit beam that is the same as or similar to the receive beam of the STRS is used for sending the PUSCH.

A starting RB and a total bandwidth length of the sensing signal may be indicated in the IE STRS-FrequencyOccupation below.

Two parameters may be added to STRS-FrequencyOccupation: the starting RB (denoted as startingRB) and the total bandwidth length (denoted as nrofRBs), where startingRB denotes a starting PRB of the STRS or an STRS resource relative to common resource block 0 (CRB#0), and nrofRBs denotes the number of PRBs spanned or occupied by the STRS or the STRS resource.

Additionally, a QCL relationship between the sensing target signal (STRS) and another sensing target signal (simply referred to as a sensing target) may be newly defined, for example, QCL TypeE:
- 'typeA': {Doppler shift, Doppler spread, average delay, delay spread};
- 'typeB': {Doppler shift, Doppler spread};
- 'typeC': {Doppler shift, average delay};
- 'typeD': {spatial Rx parameter};
- 'typeE': {Doppler shift, average delay, angle};
   or
- 'typeE': {Doppler shift, average delay, average angle};
   or
- 'typeE': {average angle};
   or
- 'typeE': {average RCS};
where RCS is short for radar cross-section.

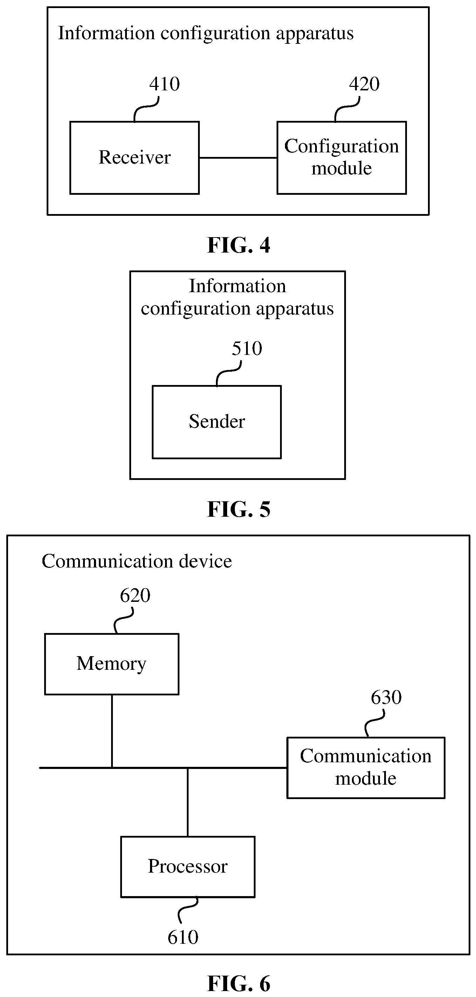

In an embodiment, FIG. 4 is a block diagram of an information configuration apparatus according to an embodiment of the present application. This embodiment is applied to a first communication device. As shown in FIG. 4, the information configuration apparatus of this embodiment includes a receiver 410 and a configuration module 420.

The receiver 410 is configured to receive sensing signal bandwidth configuration information from a second communication device.

The configuration module 420 is configured to configure a frequency domain bandwidth of a corresponding sensing signal based on the sensing signal bandwidth configuration information.

In an embodiment, in response to the frequency domain bandwidth of the sensing signal being not configured via wireless signaling, the frequency domain bandwidth of the sensing signal is equal to a DMRS frequency domain bandwidth of a current first communication device.

In an embodiment, in response to the frequency domain bandwidth of the sensing signal being configured via wireless signaling, the frequency domain bandwidth of the sensing signal is configured in units of DMRS frequency domain bandwidths.

In an embodiment, configuring the frequency domain bandwidth of the sensing signal in units of DMRS frequency domain bandwidths includes one of the following: the frequency domain bandwidth of the sensing signal is equal to a current bandwidth unit; the frequency domain bandwidth of the sensing signal is equal to a sum of a first preset number of bandwidth units preceding the current bandwidth unit and the current bandwidth unit; the frequency domain bandwidth of the sensing signal is equal to a sum of a first preset number of bandwidth units following the current bandwidth unit and the current bandwidth unit; or the frequency domain bandwidth of the sensing signal is equal to a sum of a second preset number of bandwidth units preceding the current bandwidth unit, the current bandwidth unit, and a third preset number of bandwidth units following the current bandwidth unit; where the current bandwidth unit is the DMRS frequency domain bandwidth of the current first communication device, and where the first preset number, the second preset number, and the third preset number are each an integer greater than 0.

In an embodiment, configuring the frequency domain bandwidth of the sensing signal in units of DMRS frequency domain bandwidths includes: indicating the frequency domain bandwidth of the sensing signal via RRC signaling of a fourth preset number of bits.

In an embodiment, the frequency domain bandwidth of the sensing signal includes at least one of: the current bandwidth unit; the current bandwidth unit and at least one bandwidth unit preceding the current bandwidth unit; or the current bandwidth unit and at least one bandwidth unit following the current bandwidth unit.

In an embodiment, the sensing signal includes DMRSs of at least two terminals.

In an embodiment, the sensing signal serves as a reference signal for QCL information in a TCI state.

In an embodiment, a reference signal type in the TCI state includes at least an STRS.

In an embodiment, a starting resource block and a total bandwidth length of the sensing signal are indicated via RRC signaling.

In an embodiment, a QCL type between the STRS and another sensing target includes TypeE.

The TypeE includes at least one of a Doppler shift, an average delay, and an average angle; a Doppler shift, an average delay, and an average angle; an average angle; or an average RCS.

The information configuration apparatus of this embodiment is configured to perform the information configuration method applied to the first communication device according to the embodiment shown in FIG. 1. The implementation principles and technical effects of the information configuration apparatus of this embodiment are similar to those of the information configuration method applied to the first communication device and thus are not repeated here.

In an embodiment, FIG. 5 is another block diagram of an information configuration apparatus according to an embodiment of the present application. This embodiment is applied to a second communication device. As shown in FIG. 5, the information configuration apparatus of this embodiment includes a sender 510.

The sender 510 is configured to send sensing signal bandwidth configuration information to a first communication device to enable the first communication device to configure a frequency domain bandwidth of a corresponding sensing signal based on the sensing signal bandwidth configuration information.

In an embodiment, in response to the frequency domain bandwidth of the sensing signal being not configured via wireless signaling, the frequency domain bandwidth of the sensing signal is equal to a DMRS frequency domain bandwidth of a current first communication device.

In an embodiment, in response to the frequency domain bandwidth of the sensing signal being configured via wireless signaling, the frequency domain bandwidth of the sensing signal is configured in units of DMRS frequency domain bandwidths.

In an embodiment, configuring the frequency domain bandwidth of the sensing signal in units of DMRS frequency domain bandwidths includes one of the following: the frequency domain bandwidth of the sensing signal is equal to a current bandwidth unit; the frequency domain bandwidth of the sensing signal is equal to a sum of a first preset number of bandwidth units preceding the current bandwidth unit and the current bandwidth unit; the frequency domain bandwidth of the sensing signal is equal to a sum of a first preset number of bandwidth units following the current bandwidth unit and the current bandwidth unit; or the frequency domain bandwidth of the sensing signal is equal to a sum of a second preset number of bandwidth units preceding the current bandwidth unit, the current bandwidth unit, and a third preset number of bandwidth units following the current bandwidth unit; where the current bandwidth unit is the DMRS frequency domain bandwidth of the current first communication device, and where the first preset number, the second preset number, and the third preset number are each an integer greater than 0.

In an embodiment, configuring the frequency domain bandwidth of the sensing signal in units of DMRS frequency domain bandwidths includes: indicating the frequency domain bandwidth of the sensing signal via RRC signaling of a fourth preset number of bits.

In an embodiment, the frequency domain bandwidth of the sensing signal includes at least one of: the current bandwidth unit; the current bandwidth unit and at least one bandwidth unit preceding the current bandwidth unit; or the current bandwidth unit and at least one bandwidth unit following the current bandwidth unit.

In an embodiment, the sensing signal includes DMRSs of at least two terminals.

In an embodiment, the sensing signal serves as a reference signal for QCL information in a TCI state.

In an embodiment, a reference signal type in the TCI state includes at least an STRS.

In an embodiment, a starting resource block and a total bandwidth length of the sensing signal are indicated via RRC signaling.

In an embodiment, a QCL type between the STRS and another sensing target includes TypeE.

The TypeE includes at least one of a Doppler shift, an average delay, and an average angle; a Doppler shift, an average delay, and an average angle; an average angle; or an average RCS.

The information configuration apparatus of this embodiment is configured to perform the information configuration method applied to the second communication device according to the embodiment shown in FIG. 2. The implementation principles and technical effects of the information configuration apparatus of this embodiment are similar to those of the information configuration method applied to the second communication device and thus are not repeated here.

In an embodiment, FIG. 6 is a diagram illustrating the structure of a communication device according to an embodiment of the present application. As shown in FIG. 6, the communication device of the present application includes a processor 610, a memory 620, and a communication module 630. One or more processors 610 may be provided in the device. FIG. 6 shows one processor 610 as an example. One or more memories 620 may be provided in the device. FIG. 6 shows one memory 620 as an example. The processor 610, the memory 620, and the communication module 630 of the device may be connected by a bus or otherwise. FIG. 6 shows the connection by a bus as an example. In this embodiment, the device may be a first communication device or a second communication device.

As a computer-readable storage medium, the memory 620 may be configured to store software programs, computer-executable programs, and modules, such as program instructions/modules (for example, the receiver 410 and the configuration module 420 in the information configuration apparatus applied to the first communication device) corresponding to the device of any embodiment of the present application. The memory 620 may include a program storage region and a data storage region. The program storage region may store an operating system and an application program required by at least one function. The data storage region may store data created depending on the use of the device. Additionally, the memory 620 may include a high-speed random-access memory and may also include a nonvolatile memory such as at least one disk memory, a flash memory, or another nonvolatile solid-state memory. In some examples, the memory 620 may be remote relative to the processor 610 and connectable to the device via a network. Examples of the network include, but are not limited to, the Internet, an intranet, a local area network, a mobile communication network, and a combination thereof.

In the case where the communication device is the first communication device, the device may be configured to perform the information configuration method applied to the first communication device according to any preceding embodiment and has corresponding functions and effects.

In the case where the communication device is the second communication device, the device may be configured to perform the information configuration method applied to the second communication device according to any preceding embodiment and has corresponding functions and effects.

An embodiment of the present application provides a storage medium including computer-executable instructions which, when executed by a computer processor, cause the computer processor to perform an information configuration method applied to a first communication device. The method includes: receiving sensing signal bandwidth configuration information from a second communication device; and configuring a frequency domain bandwidth of a corresponding sensing signal based on the sensing signal bandwidth configuration information.

An embodiment of the present application provides a storage medium including computer-executable instructions which, when executed by a computer processor, cause the computer processor to perform an information configuration method applied to a second communication device. The method includes: sending sensing signal bandwidth configuration information to a first communication device to enable the first communication device to configure a frequency domain bandwidth of a corresponding sensing signal based on the sensing signal bandwidth configuration information.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

Preferred embodiments of the present application are described above, which are not intended to limit the present application. Those skilled in the art may make various modifications and variations to the present application. Any modifications, equivalent substitutions, and improvements made within the spirit and principle of the present application are within the scope of the present application.

## Claims

1. An information configuration method, which is applied to a first communication device, comprising:
receiving sensing signal bandwidth configuration information from a second communication device; and
configuring a frequency domain bandwidth of a corresponding sensing signal based on the sensing signal bandwidth configuration information.

2. The information configuration method of claim 1, wherein in response to the frequency domain bandwidth of the sensing signal being not configured via wireless signaling, the frequency domain bandwidth of the sensing signal is equal to a demodulation reference signal (DMRS) frequency domain bandwidth of the current first communication device.

3. The information configuration method of claim 1, wherein in response to the frequency domain bandwidth of the sensing signal being configured via wireless signaling, the frequency domain bandwidth of the sensing signal is configured in units of DMRS frequency domain bandwidths.

4. The information configuration method of claim 3, wherein configuring the frequency domain bandwidth of the sensing signal in units of DMRS frequency domain bandwidths comprises one of the following:
the frequency domain bandwidth of the sensing signal is equal to a current bandwidth unit;
the frequency domain bandwidth of the sensing signal is equal to a sum of a first preset number of bandwidth units preceding a current bandwidth unit and the current bandwidth unit;
the frequency domain bandwidth of the sensing signal is equal to a sum of a first preset number of bandwidth units following a current bandwidth unit and the current bandwidth unit; or
the frequency domain bandwidth of the sensing signal is equal to a sum of a second preset number of bandwidth units preceding a current bandwidth unit, the current bandwidth unit, and a third preset number of bandwidth units following the current bandwidth unit;
wherein the current bandwidth unit is a DMRS frequency domain bandwidth of the current first communication device, and wherein the first preset number, the second preset number, and the third preset number are each an integer greater than 0.

5. The information configuration method of claim 3, wherein configuring the frequency domain bandwidth of the sensing signal in units of DMRS frequency domain bandwidths comprises: indicating the frequency domain bandwidth of the sensing signal via radio resource control (RRC) signaling of a fourth preset number of bits.

6. The information configuration method of claim 5, wherein the frequency domain bandwidth of the sensing signal comprises at least one of: a current bandwidth unit; a current bandwidth unit and at least one bandwidth unit preceding the current bandwidth unit; or a current bandwidth unit and at least one bandwidth unit following the current bandwidth unit.

7. The information configuration method of any one of claims 1 to 6, wherein the sensing signal comprises DMRSs of at least two terminals.

8. The information configuration method of claim 1, wherein the sensing signal serves as a reference signal for quasi co-location (QCL) information in a transmission configuration indicator (TCI) state.

9. The information configuration method of claim 8, wherein a reference signal type in the TCI state comprises at least a sensing target reference signal (STRS).

10. The information configuration method of claim 8, wherein a starting resource block and a total bandwidth length of the sensing signal are indicated via RRC signaling.

11. The information configuration method of claim 9, wherein a QCL type between the STRS and another sensing target comprises TypeE;
wherein the TypeE comprises at least one of: a Doppler shift, an average delay, and an average angle; a Doppler shift, an average delay, and an average angle; an average angle; or an average radar cross-section (RCS).

12. An information configuration method, which is applied to a second communication device, comprising:
sending sensing signal bandwidth configuration information to a first communication device to enable the first communication device to configure a frequency domain bandwidth of a corresponding sensing signal based on the sensing signal bandwidth configuration information.

13. The information configuration method of claim 12, wherein in response to the frequency domain bandwidth of the sensing signal being not configured via wireless signaling, the frequency domain bandwidth of the sensing signal is equal to a demodulation reference signal (DMRS) frequency domain bandwidth of a current first communication device.

14. The information configuration method of claim 12, wherein in response to the frequency domain bandwidth of the sensing signal being configured via wireless signaling, the frequency domain bandwidth of the sensing signal is configured in units of DMRS frequency domain bandwidths.

15. The information configuration method of claim 14, wherein configuring the frequency domain bandwidth of the sensing signal in units of DMRS frequency domain bandwidths comprises one of the following:
the frequency domain bandwidth of the sensing signal is equal to a current bandwidth unit;
the frequency domain bandwidth of the sensing signal is equal to a sum of a first preset number of bandwidth units preceding a current bandwidth unit and the current bandwidth unit;
the frequency domain bandwidth of the sensing signal is equal to a sum of a first preset number of bandwidth units following a current bandwidth unit and the current bandwidth unit; or
the frequency domain bandwidth of the sensing signal is equal to a sum of a second preset number of bandwidth units preceding a current bandwidth unit, the current bandwidth unit, and a third preset number of bandwidth units following the current bandwidth unit;
wherein the current bandwidth unit is a DMRS frequency domain bandwidth of a current first communication device, and wherein the first preset number, the second preset number, and the third preset number are each an integer greater than 0.

16. The information configuration method of claim 14, wherein configuring the frequency domain bandwidth of the sensing signal in units of DMRS frequency domain bandwidths comprises: indicating the frequency domain bandwidth of the sensing signal via radio resource control (RRC) signaling of a fourth preset number of bits.

17. The information configuration method of claim 16, wherein the frequency domain bandwidth of the sensing signal comprises one of: a current bandwidth unit; a current bandwidth unit and at least one bandwidth unit preceding the current bandwidth unit; or a current bandwidth unit and at least one bandwidth unit following the current bandwidth unit.

18. The information configuration method of claim 12, wherein the sensing signal serves as a reference signal for quasi co-location (QCL) information in a transmission configuration indicator (TCI) state.

19. The information configuration method of claim 18, wherein a reference signal type in the TCI state comprises at least a sensing target reference signal (STRS).

20. The information configuration method of claim 18, wherein a starting resource block and a total bandwidth length of the sensing signal are indicated via RRC signaling.

21. The information configuration method of claim 19, wherein a QCL type between the STRS and another sensing target comprises TypeE;
wherein the TypeE comprises at least one of: a Doppler shift, an average delay, and an average angle; a Doppler shift, an average delay, and an average angle; an average angle; or an average radar cross-section (RCS).

22. A communication device, comprising a memory and at least one processor, wherein
the memory is configured to store at least one program; and
the at least one program, when executed by the at least one processor, causes the at least one processor to perform the information configuration method of any one of claims 1 to 11 or any one of claims 12 to 21.

23. A storage medium storing a computer program which, when executed by a processor, causes the processor to perform the information configuration method of any one of claims 1 to 11 or any one of claims 12 to 21.
